# EUROPÄISCHE PATENTSCHRIFT

(11) **EP 2 289 854 B1**
(45) Veröffentlichungstag und Bekanntmachung des Hinweises auf die Patenterteilung: **08.07.2015**
(21) Anmeldenummer: 10006529.1
(22) Anmeldetag: 23.06.2010
(51) Int. Cl.: C02F 1/78, C02F 1/76, C02F 1/32, B01D 37/03, B01D 36/00, C02F 103/42, C02F 1/52

(54) **Vorrichtung zur Aufbereitung von Badewasser**
Device for treating bath water
Dispositif destinés à la préparation d'eau de bain

(30) Priorität: 28.07.2009 DE 102009035076
(43) Veröffentlichungstag der Anmeldung: 02.03.2011
(73) Patentinhaber: SOL-UV Technologie & Entwicklungs-GmbH, 5023 Salzburg (AT)
(72) Erfinder: Höller, Christian, 5310 Mondsee (AT); Polak, Walter, 5020 Salzburg (AT)
(74) Vertreter: Berngruber, Otto

(56) Entgegenhaltungen:
- DE-A1- 3 830 999
- DE-A1-102004 027 574
- DE-U1-202005 019 293
- GB-A- 2 306 463
- JP-A- H01 148 392
- JP-A- 2002 086 168
- US-A- 4 752 401
- US-B1- 7 186 334
- BERNHARD G: "LE TRAITEMENT DES EAUX DE PISCINE", CFP CHAUD FROID PLOMBERIE, EDITIONS PARISIENNES. PARIS, FR, Bd. 46, Nr. 536, 1. Mai 1992 (1992-05-01), Seiten 85-90, XP000267251, ISSN: 0750-1552

## Beschreibung

Die Erfindung bezieht sich auf eine Vorrichtung zur Aufbereitung und Desinfektion des Wassers eines Schwimm- oder Badebeckens nach dem Oberbegriff des Anspruchs

Eine derartige Vorrichtung ist aus DE 38 30 999 A1 bereits bekannt. Damit soll die Verkeimung des Filters verhindert werden. Um eine Behandlung des Badewassers mit Chemikalien, einschließlich Chlorierung zu eliminieren, wird nach US 4,752,401 A das dem Badebecken entnommene Badewasser, bevor es zurück ins Badebecken geführt wird, mit Ultravioloettstrahlung mit einer Wellenlänge von etwa 180 nm behandelt, um den darin gelösten Sauerstoff in Ozon umzuwandeln.

Nach US 7,186,334 B1 wird verunreinigtes Wasser mit Kochsalz versetzt und in einer Kammer einer Behandlung mit Ultraviolettstrahlung und damit erzeugtem Ozon sowie einer Elektrolyse unterworfen, um Natriumhydroxid und Chlor zu bilden. Die Verunreinigungen werden durch eine komplexe Reaktion zwischen Ozon, Natriumhydroxid und Chlor als Präzipitat gebunden.

Durch die Behandlung des Schwimm- und Badewassers mit Chlor entsteht auch nach DE 38 30 999 A1 der bekannte, als unangenehm empfundene Hallenbadgeruch. Auch können mit der bekannten Vorrichtung sensorisch nicht wahrnehmbare, gesundheitlich bedenklich Chlorreaktionsprodukte nicht eliminiert und deaktiviert werden.

Aufgabe der Erfindung ist es daher, neben der Keimreduzierung und der Reduzierung von Schadstoffen im Wasser insbesondere den unangenehmen Geruch in der Luft oberhalb der Wasseroberfläche des Schwimm- und Badebeckenwassers vollständig zu beseitigen.

Dies wird erfindungsgemäß mit der im Anspruch 1 gekennzeichneten Vorrichtung erreicht, welche durch die Ansprüche 2 bis 8 in vorteilhafter Weise weiter ausgebildet wird.

Erfindungsgemäß ist eine Voraufbereitungsstufe vorgesehen, bei der ein Teilstrom des aus dem Schwallwasserbehälter austretenden Wassers vor der Zugabe des Flockungsmittels dem Rohwasser in dem Schwallwasserbehälter wieder zugeführt wird, wobei dieser Teilstrom einer Behandlung mit Ultraviolettstrahlung und Ozon unterworfen wird. Dabei kann das Rohwasser dem Schwallwasserbehälter auch direkt wieder zugeführt werden.

Das Wasser wird nach dem Durchfließen des Filters einer Chlorbehandlung unterworfen.

Das Rohwasser ist als Überlaufrinnenwasser hinsichtlich organischer und mikrobiologischer Verunreinigungen das am stärksten belastete Wasser in einem Schwimm- und Badebeckenwasserkreislauf. Außerdem hat es die geringste Desinfektionskapazität, also einen geringen Chlor-Gehalt und eine niedrige Redox-Spannung, sodass es zu einem erhöhten KBE (Kolonie bildende Einheiten)-Wert mit allen Problemen für die nachfolgende Filtration ( Filtermaterialverkeimung ), insbesondere bei Filtermaterialien mit adsorptiven Eigenschaften, wie z.B.Filterkohlen, führt. Eine zusätzliche Problematik kann sich durch das Füllwasser ergeben, bei dem ebenfalls ein definierter KBE-Wert erlaubt ist.

Gleichzeitig werden erfindungsgemäß die mikrobiologischen Parameter im Schwallwasser verbessert, also eine wesentliche Verringerung des KBE-Werts erzielt, wodurch sich die Keimbelastung auf dem bzw. im Filtermaterial wesentlich verringert und somit Filterverkeimungen entgegengewirkt wird.

Nach der Erfindung wird eine UV-Lichtquelle verwendet, die in der Lage ist, Licht mit einer Wellenlänge von weniger als 200 nm, insbesondere weniger als 185 nm zu emittieren.

Überraschenderweise hat sich nämlich herausgestellt, dass sich die Qualität der Luft oberhalb der Wasseroberfläche des Schwimm- und Badebeckenwassers nur dann wirksam verbessern lässt, wenn ein UV-Licht mit einer derart kurzen Wellenlänge zum Einsatz kommt.

Dies dürfte darauf zurückzuführen sein, dass UV-Licht mit einer Wellenlänge von weniger als 200 nm, insbesondere weniger als 185 nm, Verbindungen, wie Chloramine, die den unangenehmen Geruch hervorrufen, ebenso wie Präkusoren, also Verbindungen, die mit Chlor zu diesen unangenehm riechenden Verbindungen reagieren, in Verbindung mit Ozon so vollständig zersetzt, dass sie nicht mehr wahrgenommen werden können.

Dabei kann als UV-Lichtquelle eine Quecksilberdampflampe verwendet werden, die Licht mit einer Wellenlänge von weniger als 200 nm, insbesondere weniger als 185 nm emittiert. Dabei weist das Emissionsspektrum der Lampe außerdem eine UV-Strahlung größerer Wellenlänge auf. So kann die Quecksilberdampflampe z. B. neben der Strahlung mit dieser kurzen Wellenlänge auch Strahlung mit einer Wellenlänge von 254 nm emittieren. Jedoch beträgt der Anteil der Strahlung mit der Wellenlänge von weniger als 200 nm, insbesondere weniger als 185 nm, wenigstens 20 % der Gesamtstrahlungsleistung der UV-Lampe. Die Leistung der UV-Lampe hängt u. a. vom Durchsatz des zu reinigenden Wassers ab. Normalerweise weist die UV-Lampe eine Leistung zwischen 40 und 300 Watt auf. Der Wirkungsgrad der UV-Lampe, also der Anteil der Strahlungsleistung zur verbrauchten elektrischen Energie der Lampe beträgt dabei normalerweise mindestens 20 %.

Dabei wird erfindungsgemäß keinerlei geruchliche oder geschmackliche Beeinträchtigung des Schwimm- und Badewassers hervorgerufen. Augenreizungen und eine Reizung der Haut oder Schleimhaut sind damit sicher verhindert. Vor allem aber werden die Luftverhältnisse oberhalb der Wasseroberfläche und in der Schwimmhalle sowie die mikrobiologischen Verhältnisse entscheidend verbessert.

Dabei sind die erfindungsgemäß zusätzlich erforderlichen Einrichtungen kostengünstig und einfach einzubauen sowie bestehende Schwimm- und Badewasseraufbereitungsanlagen einfach nachzurüsten, leicht zu kontrollieren und zu warten.

Die Behandlung des im Kreislauf geführten Teilstroms des aus dem Schwallwasserbehälter austretenden Rohwassers mit UV-Licht und Ozon kann mit getrennten Vorrichtungen für die UV-Behandlung und die Ozonbehandlung durchgeführt werden.

Zur Ozon-Erzeugung wird dem Ozon-Generator vorzugsweise getrocknete Luft zuführt, wobei die darin enthaltenden Sauerstoffmoleküle durch elektrische Entladung zu Sauerstoffatomen dissoziieren, um mit weiteren Sauerstoffmolekülen in der Luft Ozon zu bilden. Das Ozon/LuftGemisch kann dann beispielsweise mit einer Venturi-Düse dem Teilstrom in der Rücklaufleitung zugeführt werden.

Statt eines separaten Ozon-Generators wird die UV-Lichtquelle zur Ozonerzeugung verwendet.

Dazu strömt die Luft beispielsweise an der UV-Lampe entlang, um aus dem Sauerstoff der Luft Sauerstoffatome zu bilden, die mit weiteren Sauerstoffmolekülen zu Ozon reagieren. Das Ozon/Luft-Gemisch wird dann in dem Teilstrom in der Rücklaufleitung zugeführt.

Erfindungsgemäß ist in Strömungsrichtung vor der Anlage zur Behandlung des Rohwassers mit UV-Strahlung und Ozon eine zusätzliche Einrichtung zur Vorbehandlung des Rohwasserteilstroms mit Ozon vorgesehen.

Die Ozonvorbehandlungseinrichtung kann dabei in einer Bypass-Leitung zur Rücklaufleitung angeordnet sein. Auch kann eine Venturi-Düse vorgesehen sein, um die Luft durch die Ozonvorbehandlungseinrichtung zu saugen. Die Ozonvorbehandlungseinrichtung kann eine Ionisierungseinrichtung mit Koronaentladung sein.

Das Rohwasser für den im Kreislauf geführten Teilstrom kann dem Ablauf des Schwallwasserbehälters entnommen werden, der im allgemeinen am Boden angeordnet ist. Die an den Ablauf des Schwallwasserbehälters angeschlossene Rücklaufleitung ist dann mit einer in Strömungsrichtung des Teilstroms vor der Anlage zur UV- und Ozonbehandlung angeordneten (zusätzlichen) Umwälzpumpe versehen.

Statt dessen kann die Rücklaufleitung an die den Schwallwasserbehälter mit den Filter verbindende RohwasserLeitung in Strömungsrichtung des Rohwasser nach der in dieser Leitung vorgesehenen Umwälzpumpe angeschlossen sein. Der zu definierende Förderstrom des Teilstroms in der Rücklaufleitung ist dann vorzugsweise mit einem in die Rücklaufleitung eingebauten Durchflussmengenmesser einstell- und kontrollierbar. Da bei dieser Variante das im Teilstrom geführte Rohwasser an der Druckseite der Umwälzpumpe in der den Schwallwasserbehälter mit dem Filter verbindenden Leitung entnommen wird, kann auf eine zusätzliche Umwälzpumpe verzichtet werden. Wie der Ablauf ist vorzugsweise auch die Leitung, die den Schwallwasserbehälter mit dem Filter verbindet, im unteren Bereich an den Schwallwasserbehälter angeschlossen, also im Abstand von der Rohwasserleitung, die vorzugsweise in den oberen Bereich des Schwallwasserbeckens mündet.

Die Ozonvorbehandlungseinrichtung ist zwischen der jeweiligen Umwälzpumpe und der Anlage zur UV- und Ozon-Behandlung angeordnet.

Nach der Erfindung kann die Chlorung des Wassers reduziert, also die eingesetzte Chlormenge, aber auch der Chlorgehalt des Schwimm- oder Badebeckenwassers auf den gesetzlich festgelegten Mindestwert (unteren Grenzwert) reduziert werden.

Nachstehend ist die Erfindung anhand der Zeichnung beispielhaft näher erläutert. Darin zeigen jeweils schematisch
Figur 1 und 2 eine Vorrichtung zur Schwimm- und Badewasseraufbereitung nach einer ersten bzw. zweiten Ausführungsform der Erfindung, und
Figur 3 eine detaillierte Ansicht einer Anlage zur Behandlung des Rohwassers mit Ultraviolettstrahlung und Ozon.

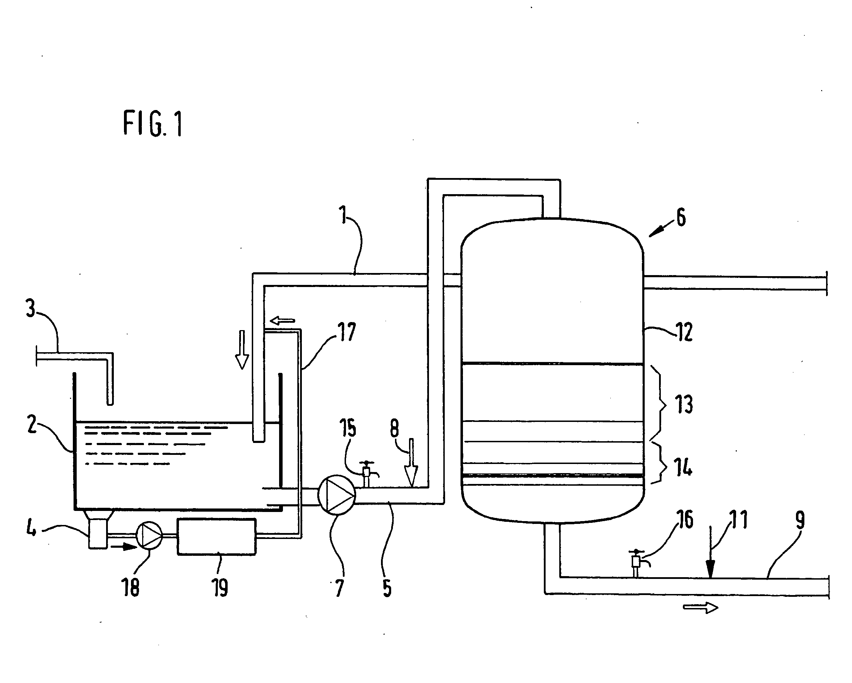

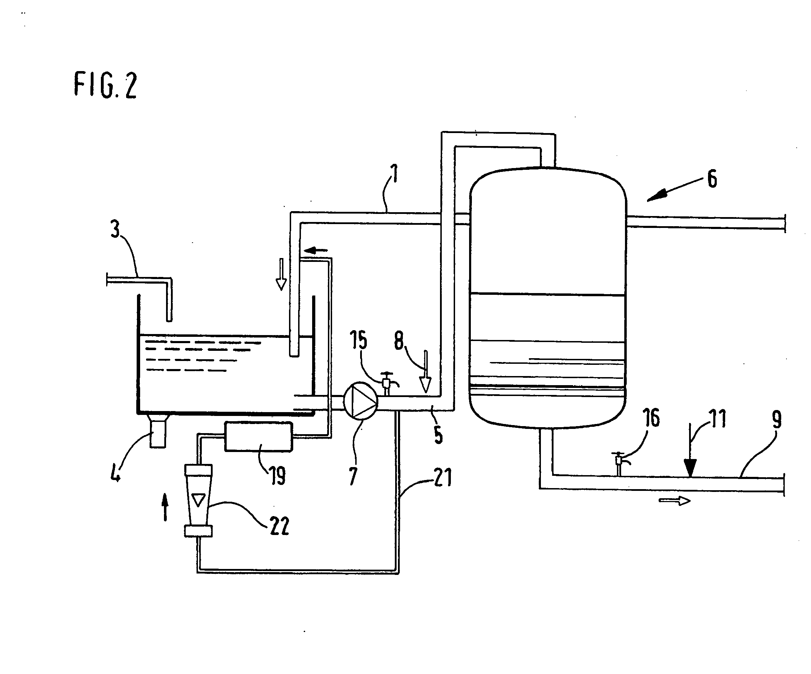

Gemäß Figur 1 und 2 fließt das über die nicht dargestellte Überlaufrinne des Schwimm- oder Badebeckens laufende Rohwasser über die Rohwasserleitung 1 in das Schwallwasserbecken oder dergleichen Behälter 2. Der Schwallwasserbehälter 2 ist mit einem Zulauf 3 für Füllwasser, also Frischwasser, versehen und weist am Boden einen Ablauf 4 auf.

In einer Leitung 5, die den Schwallwasserbehälter 2 mit der Filteranlage 6 verbindet, ist eine Umwälzpumpe 7 vorhanden, ferner eine Zugabestelle 8 zur kontinuierlichen Dosierung eines Flockungsmittels. Das aus der Filteranlage 6 austretende Filtrat wird über die Filtratleitung 9 zum Schwimm- oder Badebecken weitergeleitet, jedoch bei "11" zuvor mit Chlor versetzt, beispielsweise gasförmiges Chlor oder als Alkali- oder Erdalkali-Hypochlorit und dann als sogenanntes "Reinwasser" dem Schwimm-u. Badebecken wieder zugeführt

Die Filteranlage 6 kann ein Einschicht-Sandfilter, Mehrschichtfilter ,Anschwemmfilter oder Membranfilter sein. Mit "15" und "16" sind Probeentnahmestellen für das Rohwasser bzw. das Filtrat bezeichnet.

Gemäß Figur 1 ist an den Bodenablauf 4 des Schwallwasserbehälters 2 eine Rücklaufleitung 17 angeschlossen, über die ein Teilstrom des Rohwassers aus dem Schwallwasserbehälter 2 der Rohwasserleitung 1 wieder zugeführt wird. In der Rücklaufleitung 17 ist eine Umwälzpumpe 18 vorgesehen, und in Strömungsrichtung des Teilstroms nach der Umwälzpumpe 18 eine Anlage 19 zur Behandlung des Teilstroms in der Rücklaufleitung 17 mit UV- und Ozon Strahlung.

Die Ausführungsform nach Figur 2 unterscheidet sich von der derjenigen nach Figur 1 im Wesentlichen dadurch, dass die Rücklaufleitung 21 für den Rohwasser-Teilstrom nach der Umwälzpumpe 7 in der Leitung 5 angeschlossen und in Strömungsrichtung des Teilstroms in der Rücklaufleitung 21 vor der Anlage 19 zur Behandlung des Teilstroms in der Rücklaufleitung 17 mit UV- und Ozon Strahlung ein Durchflussmengenmesser 22 angeordnet ist.

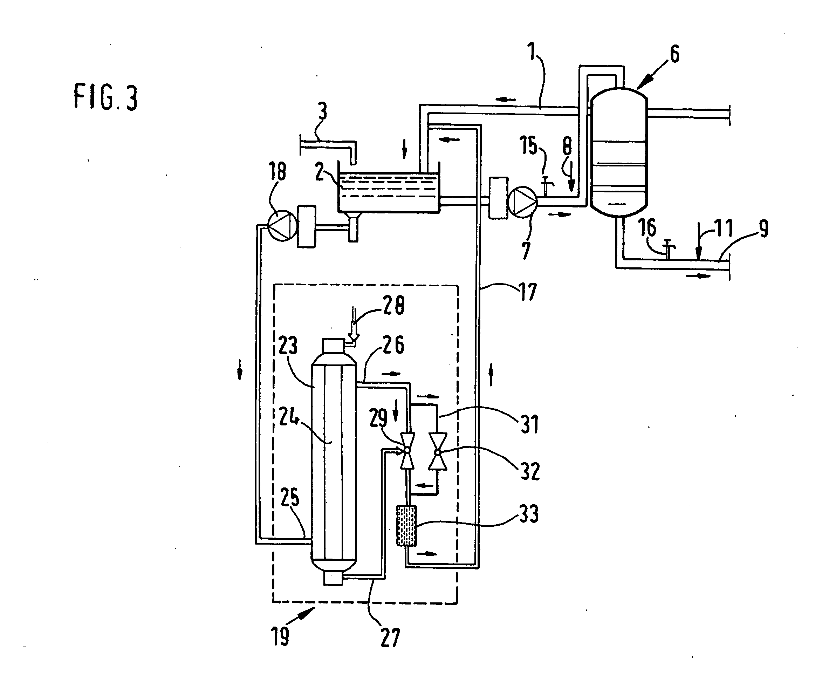

In Figur 3 ist die Anlage 19 zur Behandlung des Rohwassers mit UV-Licht und Ozon anhand der Vorrichtung nach Figur 1 näher dargestellt. Dabei werden in Figur 3 die in Figur 1 benutzten Bezugsziffern für die übrigen Komponenten verwendet. Die Anlage 19 gemäß Figur 2 ist in gleicher Weise ausgebildet.

Gemäß Figur 3 weist die Anlage 19 zur Behandlung des Rohwassers in der Rücklaufleitung 17 eine UV-Bestrahlungskammer 23 mit einem als Rohr ausgebildeten Kanal 24 auf, in dem die nicht dargestellte UV-Lichtquelle angeordnet ist. Das Rohr 24 kann dazu aus einem Quarzglas bestehen, das UV-Strahlung auch unterhalb einer Wellenlänge von 200 nm transmittiert. Die UV-Bestrahlungskammer 23 ist an einem Ende mit einem Zulauf 25 versehen, durch den das Rohwasser in der Rücklaufleitung 17 durch die Pumpe 18 in den den Kanal 24 umgebenden Bereich der z.B. zylindrischen Bestrahlungskammer 23 gedrückt wird. Ferner weist die Kammer 23 am anderen, oberen Ende einen Ablauf 26 auf, aus dem das in der Kammer 23 mit UV-Strahlung behandelte Rohwasser wieder in die Rücklaufleitung 17 eintritt.

Die Luft und damit der Sauerstoff zur Ozon-Bildung wird über einen Einlass 28 im Gegenstrom durch den Kanal 24 in der Kammer 23 gesaugt und durch das UV-Licht in dem Kanal 24 zumindest teilweise in Ozon umgesetzt. Das in der Kammer 23 gebildete Ozon tritt über eine Ozon-Leitung 27 aus dem Kanal 24 am anderen Ende der Kammer 23 auf. Die Luft wird dabei im Gegenstrom zu dem Wasser in der Behandlungskammer 23 geführt. Die Vermischung des Ozons mit dem mit UV-behandelten Wasser erfolgt in der Venturi-Düse 29, die stromabwärts der Kammer 23 in der Rücklaufleitung 17 vorgesehen ist. Die Venturi-Düse 29 bildet damit zugleich die Saugeinrichtung, mit der die Luft zur Ozonbildung durch den Kanal 24 gesaugt wird.

Zur Einstellung der Menge des durch die Venturi-Düse 29 fließenden, in der UV-Bestrahlungskammer 23 mit UV-Strahlung behandelten Wassers, ist eine Bypass-Leitung 31 mit einem Regulierventil 32 vorgesehen.

Weiterhin ist stromabwärts der Venturi-Düse 29 und der Bypass-Leitung 31 eine Sichtstrecke 33 zur visuellen Kontrolle von Gasbläschen in der Rücklaufleitung 17 vorgesehen.

Da zwischen der Menge der Gasbläschen und der Menge der angesaugten ozonisierten Luft ein Zusammenhang besteht, kann durch Einstellung des Ventils 32 die mit der Venturi-Düse 29 angesaugte Luftmenge so eingestellt werden, dass die in der Sichtstrecke 33 visuell erkennbare Bläschenbildung der empirisch ermittelten optimalen Menge angesaugter ozonisierter Luft entspricht.

Der Teilstrom kann mit der Rücklaufleitung 17, 21 auch direkt dem Schwallwasserbehälter 2 zugeführt werden. Auch kann dem Teilstrom in der Rücklaufleitung 17, 21 erst Ozon zugeführt werden, bevor er mit UV-Licht mit einer Wellenlänge von weniger als 200 nm bestrahlt wird. Dazu können die Ozonleitung 27, die Venturi-Düse 29, die Bypass-Leitung 31 mit dem Ventil 32 und die Sichtstrecke 33 zwischen der Pumpe 18 und der Anlage 19, also stromaufwärts der Anlage 19 in der Rücklaufleitung 17, 21 angeordnet sein. Ferner istzwischen der Pumpe 18 und der Anlage 19 zu der Rücklaufleitung 17, 21 eine Bypass-Leitung mit einer nicht dargestellten Ozonvorbehandlungseinrichtung vorgesehen.

Gemäß Figur 3 wird der Teilstrom des aus dem Schwallwasserbehälter 2 austretenden Wassers in der Rücklaufleitung 17 zuerst in der Bestrahlungskammer 23 einer UV-Behandlung unterworfen und anschließend über die Ozon-Leitung 27 in der Venturi-Düse 29 einer Behandlung mit Ozon.

Ferner kann die Leitung 17 stromaufwärts der Anlage 19 zur Rohwasserbehandlung mit UV-Licht und Ozon eine Bypass-Leitung aufweisen, in der ein Ozongenerator zur vorherigen, zusätzlichen Ozonbehandlung des durch die Bypass-Leitung fließenden Rohwasserstrom vorgesehen ist.

## Patentansprüche

1. Vorrichtung zur Aufbereitung und Desinfektion des Wassers eines Schwimm- oder Badebeckens, das als Rohwasser einem Schwallwasserbehälter (2) zugeführt, mit Flockungsmittel versetzt wird, einen Filter (6) durchfließt und einer Chlorbehandlung unterworfen wird, um als Reinwasser dem Becken wieder zuzufließen, mit einer Rohwasserleitung (1), durch die das Rohwasser aus dem Becken dem Schwallwasserbehälter (2) zugeführt wird, einer Umwälzpumpe (7) in einer Leitung, die den Schwallwasserbehälter (2) mit dem Filter (6) verbindet und eine Zufuhr (8) für das Flockungsmittel aufweist, und einer Rücklaufleitung (17, 21), über die ein Teilstrom des aus dem Schwallwasserbehälter (2) austretenden Rohwassers vor Zugabe des Flockungsmittels an der Flockungsmittelzufuhr (8) dem Rohwasser wieder zugeführt wird, wobei eine Einrichtung zur Behandlung des Rohwassers in der Rücklaufleitung (17, 21) mit Ultraviolettstrahlung und Ozon vorgesehen ist, **gekennzeichnet durch** eine Anlage (19) zur Behandlung des Rohwassers mit Ultraviolettstrahlung und Ozon in der Rücklaufleitung (17, 21), die eine Ultraviolett-Lichtquelle aufweist, die eine Ultraviolettstrahlung mit einer Wellenlänge von weniger als 200 nm und mit größerer Wellenlänge emittiert, wobei die Ultraviolettstrahlung mit einer Wellenlänge von weniger als 200 nm wenigstens 20% der Gesamtleistung der Ultraviolett-Lichtquelle beträgt, wobei in Strömungsrichtung vor der Anlage (19) zur Behandlung des Rohwassers mit Ultraviolettstrahlung und Ozon die Einrichtung zur Behandlung des Rohwasserteilstroms in der Rücklaufleitung (17, 21) mit Ozon vorgesehen ist, wobei die Anlage (19) zur Behandlung des Rohwassers mit Ultraviolettstrahlung und Ozon eine Ultraviolett-Bestrahlungskammer (23) mit einem Kanal (24) aufweist, in dem die Ultraviolett-Lichtquelle angeordnet ist, wobei die Rücklaufleitung (17, 21) an die Ultraviolett-Bestrahlungskammer (23) mit einem Zulauf (25) und einem Ablauf (26) zur Zufuhr des Rohwassers und zur Abfuhr des mit der Ultraviolettstrahlung behandelten Wassers angeschlossen und eine Saugeinrichtung vorgesehen ist, um Luft zur Ozon-Bildung **durch** den Kanal (24) zu saugen, wobei das in dem Kanal (24) gebildete Ozon über eine Ozonleitung (27) der Rücklaufleitung (17, 21) zugeführt wird.

2. Vorrichtung nach Anspruch 1, **dadurch gekennzeichnet, dass** die Rücklaufleitung (17) an den Ablauf (4) des Schwallwasserbehälters (2) angeschlossen und mit einer in Strömungsrichtung vor der Anlage (19) zur Behandlung des Rohwassers mit Ultraviolettstrahlizng und Ozon und vor der Einrichtung zur Ozonvorbehandlung angeordneten Umwälzpumpe (18) versehen ist.

3. Vorrichtung nach Anspruch 1, **dadurch gekennzeichnet, dass** die Rücklaufleitung (21) in Strömungsrichtung nach der Umwälzpumpe (7) an die den Schwallwasserbehälter (2) mit dem Filter (6) verbindende Leitung (5) angeschlossen ist.

4. Vorrichtung nach einem der Ansprüche 1 bis 3, **dadurch gekennzeichnet, dass** in der Rücklaufleitung (21) ein Durchflussmengenmesser (22) vorgesehen ist.

5. Vorrichtung nach Anspruch 1, **dadurch gekennzeichnet, dass** die Saugeinrichtung durch eine Venturi-Düse (29) in der Rücklaufleitung (17, 21) gebildet wird.

6. Vorrichtung nach Anspruch 5, **dadurch gekennzeichnet, dass** eine Bypass-Leitung (31) mit einem Ventil (32) zur Einstellung der Menge des durch die Venturi-Düse (29) fließenden Wassers vorgesehen ist.

7. Vorrichtung nach Anspruch 5 oder 6, **dadurch gekennzeichnet, dass** in der Rücklaufleitung (17, 21) stromabwärts der Venturi-Düse (29) in der Rücklaufleitung (17, 21) eine Sichtstrecke (33) zur visuellen Kontrolle von Gasbläschen in der Rücklaufleitung (17, 21) vorgesehen ist.

8. Vorrichtung nach einem der vorstehenden Ansprüche, **gekennzeichnet durch** eine Leitung (3) zur Zufuhr von Füllwasser in den Schwallwasserbehälter (2).

## Claims

1. A device for the treatment and disinfection of the water of a swimming or bathing pool fed as raw water into an overflow tank (2), mixed with a flocculant, flowing through a filter (6) and subjected to a chlorine treatment so as to flow into the pool again as pure water, having a raw water pipe (1) through which the raw water is fed from the pool into the overflow tank (2), a circulation pump (7) in a pipe connecting the overflow tank (2) to the filter (6) and having an inlet (8) for the flocculant, and a return pipe (17, 21) via which a partial flow of the raw water emerging from the overflow tank (2) is fed into the raw water again before the flocculant is added at the flocculant inlet (8), wherein a device for the treatment of the raw water in the return pipe (17, 21) with ultraviolet radiation and ozone is provided, **characterized by** an equipment (19) for the treatment of the raw water with ultraviolet radiation and ozone in the return pipe (17, 21) which has an ultraviolet light source emitting ultraviolet radiation with a wavelength of less than 200 nm and with a longer wavelength, wherein the ultraviolet radiation with a wavelength of less than 200 nm amounts to at least 20 percent of the total output of the ultraviolet light source, wherein the device for the treatment of the partial flow of the raw water in the return pipe (17, 21) with ozone is provided in the direction of flow upstream of the equipment (19) for the treatment of the raw water with ultraviolet radiation and ozone, wherein the equipment (19) for the treatment of the raw water with ultraviolet radiation and ozone has an ultraviolet radiation chamber (23) with a channel (24) within which the ultraviolet light source is arranged, wherein the return pipe (17, 21) is connected to the ultraviolet radiation chamber (23) by means of an inlet (25) and an outlet (26) for the supply of the raw water and the discharge of the water treated with the ultraviolet radiation and a suction device is provided for sucking air through the channel (24) in order to form ozone, wherein the ozone formed in the channel (24) is fed into the return pipe (17, 21) via an ozone pipe (27).

2. The device according to claim 1, **characterized in that** the return pipe (17) is connected to the outlet (4) of the overflow tank (2) and provided with a circulation pump (18) arranged in the direction of flow upstream of the equipment (19) for the treatment of the raw water with ultraviolet radiation and ozone and upstream of the device for the pretreatment with ozone.

3. The device according to claim 1, **characterized in that**, in the flow direction downstream of the circulation pump (7), the return pipe (21) is connected to the pipe (5) connecting the overflow tank (2) to the filter (6).

4. The device according to any of claims 1 to 3, **characterized in that** a flow rate measuring device (22) is provided in the return pipe (21).

5. The device according to claim 1, **characterized in that** the sucking device is formed by means of a Venturi nozzle (29) in the return pipe (17, 21).

6. The device according to claim 5, **characterized in that** a bypass pipe (31) with a valve (32) for adjusting the amount of water flowing through the Venturi nozzle (29) is provided.

7. The device according to claim 5 or 6, **characterized in that**, downstream of the Venturi nozzle (29) in the return pipe (17, 21), an inspection window (33) for the visual control of gas bubbles in the return pipe (17, 21) is provided in the return pipe (17, 21).

8. The device according to any of the preceding claims, **characterized by** a pipe (3) for feeding fill-up water into the overflow tank (2).

## Revendications

1. Dispositif destiné à la préparation et à la désinfection de l'eau d'une piscine ou d'un bassin de baignade, eau qui est amenée sous forme d'eau brute à un récipient d'eau de débordement (2), à laquelle est mélangée un agent de floculation, s'écoule à travers un filtre (6) et est soumise à un traitement au chlore pour s'écouler de nouveau sous forme d'eau pure dans le bassin, comportant une conduite d'eau brute (1) à travers laquelle l'eau brute provenant du bassin est amenée au récipient d'eau de débordement (2), une pompe de circulation (7) dans une conduite qui relie le récipient d'eau de débordement (2) au filtre (6) et qui présente une amenée (8) pour l'agent de floculation, et une conduite de retour (17, 21) via laquelle un flux partiel de l'eau brute sortant du récipient d'eau de débordement (2) est de nouveau amené à l'eau brute avant d'ajouter l'agent de floculation à l'amenée d'agent de floculation (8), un système de traitement de l'eau brute dans la conduite de retour (17, 21) avec de rayonnement ultraviolet et de l'ozone étant prévu, **caractérisé par** une installation (19) de traitement de l'eau brute avec du rayonnement ultraviolet et de l'ozone dans la conduite de retour (17, 21), laquelle présente une source de lumière ultraviolette qui émet un rayonnement ultraviolet avec une longueur d'onde de moins de 200 nm et avec une plus grande longueur d'onde, le rayonnement ultraviolet avec une longueur d'onde de moins de 200 nm s'élevant à au moins 20 % de l'efficacité totale de la source de lumière ultraviolette, le système de traitement du flux partiel d'eau brute dans la conduite de retour (17, 21) avec de l'ozone étant prévu en direction d'écoulement en amont de l'installation (19) de traitement de l'eau brute avec du rayonnement ultraviolet, l'installation (19) de traitement de l'eau brute avec du rayonnement ultraviolet et de l'ozone, le système de traitement de l'eau brute avec du rayonnement ultraviolet de l'ozone présentant une chambre de rayonnement à l'ultraviolet (23) avec un canal (24) dans lequel est agencée la source de lumière ultraviolette, la conduite de retour (17, 21) étant raccordée à la chambre de rayonnement à l'ultraviolet (23) par une admission (25) et par une sortie (26) pour amener l'eau brute et pour évacuer l'eau traitée avec le rayonnement ultraviolet, et un dispositif d'aspiration étant prévu pour aspirer de l'air pour former de l'ozone à travers le canal (24), l'ozone formé dans le canal (24) étant amené à la conduite de retour (17, 21) via une conduite à ozone (27).

2. Dispositif selon la revendication 1, **caractérisé en ce que** la conduite de retour (17) est raccordée au déversoir (4) du récipient d'eau de débordement (2) et est pourvue d'une pompe de circulation (18) agencée en direction d'écoulement, en amont de l'installation (19) de traitement de l'eau brute avec du rayonnement ultraviolet et de l'ozone et en amont du système de traitement préalable à l'ozone.

3. Dispositif selon la revendication 1, **caractérisé en ce que** la conduite de retour (21) est raccordée, en direction d'écoulement en aval de la pompe de circulation (7), à la conduite (5) qui relie le récipient d'eau de débordement (2) avec le filtre (6).

4. Dispositif selon l'une des revendications 1 à 3, **caractérisé en ce qu'**un débitmètre (22) est prévu dans la conduite de retour (21).

5. Dispositif selon la revendication 1, **caractérisé en ce que** le dispositif d'aspiration est formé par une buse de Venturi (29) dans la conduite de retour (17, 21).

6. Dispositif selon la revendication 5, **caractérisé en ce qu'**il est prévu une conduite de dérivation (31) avec une vanne (32) destinée à régler la quantité d'eau s'écoulant à travers la buse de Venturi (29).

7. Dispositif selon la revendication 5 ou 6, **caractérisé en ce que** dans la conduite de retour (17, 21) en aval de la buse de Venturi (29), il est prévu un tronçon de visualisation (33) pour le contrôle visuel de bulles de gaz dans la conduite de retour (17, 21).

8. Dispositif selon l'une des revendications précédentes, **caractérisé par** une conduite (3) d'amenée d'eau de remplissage dans le récipient d'eau de débordement (2).
